# EUROPÄISCHE PATENTSCHRIFT

(11) **EP 2 396 537 B1**
(45) Veröffentlichungstag und Bekanntmachung des Hinweises auf die Patenterteilung: **29.07.2015**
(21) Anmeldenummer: 10729779.8
(22) Anmeldetag: 06.02.2010
(51) Int. Cl.: B66C 19/02, B66C 23/18, F03D 1/00

(54) **VORRICHTUNG UND VERFAHREN ZUR HERSTELLUNG VON OFFSHORE-WINDENERGIEANLAGEN**
APPARATUS AND METHOD FOR PRODUCING OFFSHORE WIND ENERGY PLANTS
ÉQUIPEMENT ET PROCÉDÉ POUR LA FABRICATION D'INSTALLATIONS AÉROGÉNÉRATRICES EN MER

(30) Priorität: 13.02.2009 DE 102009008870
(43) Veröffentlichungstag der Anmeldung: 21.12.2011
(73) Patentinhaber: STRABAG Offshore Wind GmbH, 70567 Stuttgart (DE)
(72) Erfinder: MAYER, Timo, 73728 Esslingen (DE)
(74) Vertreter: Riedel, Peter
(86) Internationale Anmeldenummer: PCT/EP2010/000754
(87) Internationale Veröffentlichungsnummer: WO 2010/091829

(56) Entgegenhaltungen:
- WO-A1-2008/084971
- WO-A2-2005/028781
- CN-Y- 2 229 443
- DE-T2- 60 009 007
- GB-A- 1 092 403
- NL-C2- 1 032 591
- US-A- 4 546 852
- US-B1- 6 357 549

## Beschreibung

Die Erfindung bezieht sich auf eine Vorrichtung zur Herstellung von Offshore-Windenergieanlagen der im Oberbegriff des Anspruchs 1 genannten Gattung sowie auf ein Verfahren zum Herstellen von Offshore-Windenergieanlagen mit den Merkmalen des Oberbegriffs des Anspruchs 7.

Im Zusammenhang mit Offshore-Windenergieanlagen sind Grün dungen bekannt, bei denen Tripods an in den Meeresboden eingerammten Pfählen verankert werden. Diese Technologie ist aber umstritten, da durch den Lärm des Einrammens der Pfähle in den Meeresboden die Meeresfauna in erheblichem Maße belastet bzw. geschädigt wird. Die aus Stahl bestehenden Tripods müssen am Bestimmungsort mit den Pfählen verbunden werden, wofür gute Bedingungen hinsichtlich des Seeganges erforderlich sind.

In der EP 1 691 073 A2 wurde bereits vorgeschlagen, flächenmäßige Gründungen aus Beton vorzusehen, wobei ein aus Betonbalken gefertigtes kreuzförmiges Fundament auf dem Meeresboden abgesetzt wird. Mit einem solchen Fundament wird nicht nur die Umwelt geschont, es kann damit auch eine Kostenreduzierung erreicht werden. Allerdings wird die Installation eines solchen Fundaments auf dem Meeresboden bei Wellengang stark behindert und ist bei hohem Seegang sogar unmöglich. Damit ist die Errichtung von Offshore-Windenergieanlagen lediglich auf das Sommerhalbjahr beschränkt und auch in dieser Zeit nur bei entsprechend ruhiger See möglich.

Da der Bedarf an erneuerbarer Energie ständig steigt, wird auch in Zukunft die Anzahl von Offshore-Windenergieanlagen erheblich zunehmen. In diesem Zusammenhang wird angestrebt, eine Baugruppe aus Fundament und Mast oder die komplette Windenergieanlage an Land zu fertigen, um von den Bedingungen im Offshore-Bereich unabhängig zu sein.

Die WO 2008/084971 A1 beschreibt eine Vorrichtung zur Herstellung von Windenergieanlagen im Offshore-Bereich, wobei eine aus zwei Elementen gebildete Plattform installiert wird, die mittels Stützen am Meersboden abgestützt wird. Auf dieser Plattform ist ein Kran installiert, der zum Anheben und Aufsetzen von Bauteilen, Baugruppen sowie der Maschinengondel der Windenergieanlage dient. Der Kran ist als Portalkran gestaltet, der zwei Kranmasten und eine an den Kranmasten vertikal verfahrbar gelagerte Traverse umfasst. An der Traverse ist eine Vorrichtung zum Aufnehmen der Bauteile sowie der Maschinengondel vorgesehen.

Aus der WO 2005/028781 A2 ist ein zusammengesetzter Mast für eine Windenergieanlage sowie ein Montageverfahren der Windenergieanlage bekannt. Der Mast wird aus mehreren zunächst konzentrisch ineinander gefügten Mastelementen gebildet, wobei das äußerste Mastelement mit seinem Fuß in einem Loch im Gelände aufgenommen ist. Mittels eines Montagegerüsts, das aus parallelen Masten und einer vertikal verfahrbaren Traverse besteht, wird die Maschinengondel über die konzentrisch ineinander befindlichen Mastelemente gebracht und auf dem oberen Ende des innersten Mastelements montiert. Dann werden die Mastelemente teleskopisch auseinander gefahren, wodurch die Maschinengondel gegenüber dem Geländeniveau angehoben wird. Schließlich werden am Rotor die Rotorblätter montiert, wozu die Maschinengondel mehrfach angehoben und abgesenkt wird. Danach wird das Montagegerüst abgebaut und die Mastelemente werden teleskopisch vollständig ausgefahren, damit die Maschinengondel der Windenergieanlage in der vorbestimmten Höhe installiert ist.

Die US 4,546,852 beschreibt einen Kran für die Verladung von Containern. Da solche Kräne periodisch geprüft und gewartet werden müssen, sind Arbeitsplattformen vorgesehen, die in verschiedenen Richtungen bewegt werden können, um an alle strukturellen Elemente des Krans zu gelangen.

Der Erfindung liegt die Aufgabe zugrunde, eine Vorrichtung zur Herstellung von Offshore-Windenergieanlagen zu schaffen, die auf einfache Weise eine effiziente Serienfertigung ermöglicht. Außerdem besteht die Aufgabe darin, ein Verfahren zum Her stellen von Offshore-Windenergieanlagen zu schaffen, durch das eine kostengünstige und präzise Produktion von kompletten Offshore-Windenergieanlagen erreicht ist.

Diese Aufgabe wird im Hinblick auf die Vorrichtung durch die Kombination der Merkmale des Anspruchs 1 und hinsichtlich des Verfahrens durch die Kombination der Merkmale des Anspruchs 7 gelöst.

Die Traverse ist an zwei Kranmasten vertikal verfahrbar gelagert. Durch diese Vorrichtung ist eine vertikale Bewegung der Bauteile der Windenergieanlage ohne nennenswerte Querbewegung möglich, so dass stets eine präzise Position der Bauteile zueinander erreichbar und dadurch das Zusammenfügen der Teile einfacher möglich ist. Außerdem ist eine Vorrichtung zum Aufnehmen von Bauteilen und/oder Baugruppen an einer Unterseite der Traverse vorgesehen. Dadurch ist eine unmittelbare Befestigung der aufzunehmenden Bauteile und/oder Baugruppen an der Traverse möglich. Es ist außerdem vorgesehen, dass die Vorrichtung zur Befestigung einer Maschinengondel der Windenergieanlage ausgebildet ist, so dass auch die Maschinengondel unmittelbar an der Traverse aufgenommen werden kann. An der Traverse ist eine Arbeitsbühne angeordnet, die eine zur Durchführung von Arbeiten vorgesehene Einsatzstellung sowie eine Außereinsatzstellung einnehmen kann. Eine solche Arbeitsbühne umfasst zwei an der Unterseite der Traverse schwenkbar gelagerte Bühnenelemente. Die Anordnung einer Arbeitsbühne an der Traverse bietet den Vorteil, dass unabhängig von der jeweiligen Höhe, in der sich die Maschinengondel befindet, Arbeiten an der Maschinengondel oder am Rotor durchgeführt werden können. Damit wird auch die für die Herstellung der kompletten Offshore-Windenergieanlage benötigte Zeit wesentlich verkürzt, so dass auch die Herstellungskosten reduziert werden. Mit der erfindungsgemäßen Vorrichtung ist es möglich, den aus mehreren Teilen bestehenden Mast an Land aufzubauen und die Maschinengondel mit Rotor auf dem oberen Mastende aufzusetzen und zu montieren.

Eine bevorzugte Ausführungsform des Portalkrans besteht darin, dass dieser einen vorderen und einen hinteren Rahmen umfasst, wobei jeder Rahmen aus zwei Kranmasten und einer ortsfesten Brücke besteht, die die oberen Enden der Kranmasten verbindet. Dabei ist es zweckmäßig, dass der vordere Rahmen mit dem hinteren Rahmen mittels oben an den Kranmasten befestigten Seitentraversen verbunden sind. Es ist weiter von Vorteil, dass an dem hinteren Rahmen eine Vorrichtung zur Aufnahme und zum Anheben von Mastelementen vorgesehen ist, wobei die Vorrichtung eine Hubtraverse und einen Drehkranarm umfasst. Alternativ hierzu kann auch ein Teleskoparm vorgesehen sein. Eine solche Gestaltung des Portalkrans bietet nicht nur den Vorteil einer besonders guten mechanischen Festigkeit und Standsicherheit, sondern ermöglicht auch die gleichzeitige Montage der Rotorblätter am Rotor an einem Rahmen des Portalkrans und das Aufbauen des Mastes an dem anderen Rahmen.

Gemäß dem erfindungsgemäßen Verfahren für den Aufbau einer Windenergieanlage wird die Traverse an den Kranmasten vertikal nach unten gefahren und in einer abgesenkten Position die Maschinengondel an der Unterseite der Traverse befestigt, und anschließend erfolgt das Anheben der Maschinengondel durch Hochfahren der Traverse. Außerdem ist es vorteilhaft, dass das Hochfahren der Traverse in mehreren Schritten erfolgt, wobei nach einem ersten Schritt des Anhebens eine Arbeitsbühne in eine Einsatzstellung gebracht wird. Dadurch ist es möglich, bereits beim Abheben von einem Betriebsgelände Monteure mit zu befördern, die nach Erreichen einer bestimmten Höhe weitere Arbeiten durchführen, wie beispielsweise das Einsetzen eines dritten Rotorblattes an dem Rotor.

Gemäß einer weiteren Ausgestaltung des Verfahrens ist vorgesehen, dass nach dem Positionieren des Mastes zwischen den Kranmasten des Portalkrans Bühnenteile einer im oberen Bereich der Kranmasten angeordneten Montagebühne derart zum Mast hin geschwenkt werden, dass die Bühnenteile ein oberes Maststück zwischen sich einschließen. Damit ist eine gute Fixierung des Mastes gegeben, die Auslenkungen des Mastes bezogen auf dessen Längsachse ausschließt. Eine weitere Ausgestaltung des Herstellungsverfahrens besteht darin, dass der Mast der Windenergieanlage mittels des Portalkrans aufgebaut wird, indem eine Flachgründung mit einem ersten Mastelement im Bereich eines Rahmens des Portalkrans positioniert wird und mittels einer Vorrichtung mehrere Mastelemente nacheinander angehoben und aufeinander montiert werden.

Ein Ausführungsbeispiel der Erfindung ist nachstehend anhand der Zeichnung näher erläutert. In der Zeichnung zeigt:
- Fig. 1: eine erste Baustufe einer Flachgründung mit Mast für eine Offshore-Windenenergieanlage,
- Fig. 2: eine zweite Baustufe der Anordnung gemäß Fig. 1 mit weiterem Maststück,
- Fig. 3: eine Maschinengondel mit Rotor und zwei Rotorblättern,
- Fig. 4: eine Vorderansicht eines Portalkranes mit vertikal verschiebbarer Traverse,
- Fig. 5: eine Draufsicht auf den Portalkran mit zugeführter Maschinengondel und Rotor,
- Fig. 6: den Portalkran gemäß Fig. 4 mit angehobener Traverse und Maschinengondel sowie in Einsatzstellung gebrachter Arbeitsbühne,
- Fig. 7: eine Seitenansicht des Portalkrans gemäß Fig. 6,
- Fig. 8: eine Darstellung gemäß Fig. 7 mit weiter angehobener Traverse und Maschinengondel sowie mit hochgeführtem dritten Rotorblatt,
- Fig. 9: eine Vorderansicht des Portalkrans in der Position der Traverse zur Montage des dritten Rotorblattes,
- Fig. 10: eine Seitenansicht der Anordnung gemäß Fig. 9,
- Fig. 11: den Portalkran mit am Rotor eingeführtem und verschraubten dritten Rotorblatt,
- Fig. 12: den Portalkran mit Gondel und Rotor in der obersten Position der Traverse,
- Fig. 13: eine Darstellung gemäß Fig. 12 mit zwischen den Kranmasten des Portalkrans positioniertem Mast mit Flachgründung,
- Fig. 14: eine Draufsicht auf die Anordnung gemäß Fig. 13,
- Fig. 15: eine Darstellung gemäß Fig. 13 mit ausgeklappter Montagebühne,
- Fig. 16: die Anordnung gemäß Fig. 15 mit einer abgesenkten Traverse zur Montage der Maschinengondel auf dem Mast,
- Fig. 17: den Portalkran mit fertig montierter Windenergieanlage,
- Fig. 18: eine Darstellung gemäß Fig. 17 mit eingeklappter Montagebühne,
- Fig. 19: eine Draufsicht auf den Portalkran mit herausgefahrener Windenergieanlage,
- Fig. 20: eine Flachgründung mit einem ersten Mastelement,
- Fig. 21: eine Vorderansicht eines Portalkrans mit einer ortsfesten Brücke und einer vertikal verschiebbaren Traverse bei der Montage der Rotorblätter an den Rotor,
- Fig. 22: eine Darstellung gemäß Fig. 21 bei einem weiteren Montageschritt der Rotorblätter an den Rotor,
- Fig. 23: den Portalkran mit vertikal nach oben gehobener Traverse,
- Fig. 24: eine Darstellung gemäß Fig. 23 mit komplett montierten Rotorblättern,
- Fig. 25: den Portalkran mit vollständig angehobener Traverse,
- Fig. 26: eine Seitenansicht des Portalkrans mit zugeführter Flachgründung beim Aufbau des Mastes in etwas vergrößerter Darstellung,
- Fig. 27: einen Schnitt entlang der Linie XXVII-XXVII in Fig. 26,
- Fig. 28: eine Vorderansicht des Portalkrans in einer Position des Mastes zum Aufsetzen der Maschinengondel auf dem Mast,
- Fig. 29: einen Schnitt entlang der Linie XXIX-XXIX in Fig. 28,
- Fig. 30: eine Darstellung gemäß Fig. 28 mit ausgeklappter Montagebühne,
- Fig. 31: den Portalkran mit Mast und Flachgründung gemäß Fig. 30 mit abgesenkter Traverse zur Montage der Maschinengondel auf dem Mast,
- Fig. 32: eine Darstellung der fertig montierten Windenergieanlage und wieder angehobener Traverse des Portalkrans,
- Fig. 33: eine Darstellung gemäß Fig. 32 mit eingeklappter Arbeitsbühne,
- Fig. 34: eine Draufsicht auf den Portalkran mit herausgefahrener Windenergieanlage.

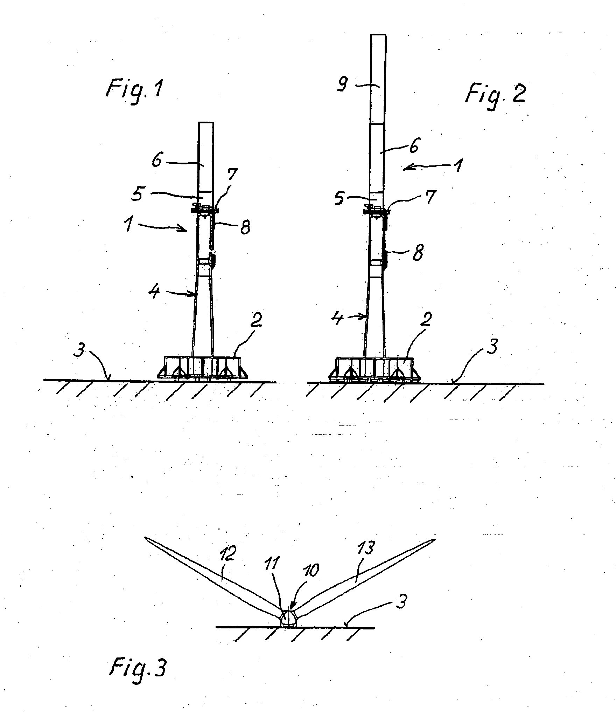

Die Fig. 1 zeigt einen Mast 1 und eine Flachgründung 2 für eine Offshore-Windenergieanlage in einer ersten Baustufe. Die Montage der Windenergieanlage erfolgt auf einem Betriebsgelände 3 nahe oder unmittelbar an einem Hafenbecken. Der Mast 1 umfasst in dieser Baustufe ein Basiselement 4 mit der Flachgründung 2 und mindestens einem mittleren Mastelement 5. An dem Mastelement 5 ist eine Plattform 7 mit einer zu dieser führenden Aufstiegsleiter 8 angebracht, wobei die Höhe der Plattform 7 über der Flachgründung 2 so bemessen ist, dass bei Installation der Windenergieanlage im Meer die Plattform 7 sich stets über dem Meeresspiegel befindet.

In Fig. 2 ist die Anordnung gemäß Fig. 1 in einer zweiten Baustufe mit einem oberen Maststück 9 dargestellt, das auf das Mastelement 6 aufgesetzt und fest mit diesem verbunden ist. Das Aufsetzen der Mastabschnitte des Basiselements 4 auf der Flachgründung 2 und das dann jeweils nacheinander erfolgende Aufsetzen des Mastelementes 6 sowie des oberen Maststückes 9 kann mittels eines geeigneten Krans erfolgen. Es kann auch eine andere Reihenfolge der Montage der einzelnen den Mast bildenden Elemente vorgesehen sein, die beispielsweise mittels eines Portalkrans, der später noch näher beschrieben wird, erfolgt.

Die Fig. 3 zeigt eine auf dem Betriebsgelände 3 legende Maschinengondel 10 der Windenergieanlage, wobei die Maschinengondel 10 einen Rotor 11 umfasst, der mit zwei Rotorblättern 12, 13 bestückt ist. Die in Fig. 3 gezeigte Baugruppe kann auf dem in Fig. 2 gezeigten Mast 1 montiert und danach mit einem dritten Rotorblatt versehen werden.

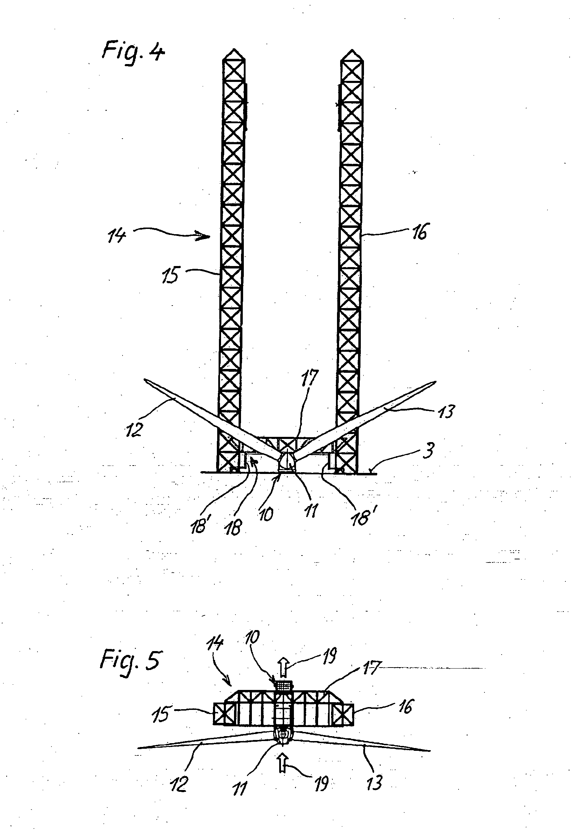

Die Fig. 4 zeigt die Vorderansicht eines Portalkrans 14, der im Wesentlichen aus zwei Kranmasten 15, 16 und zwischen diesen angeordneter Traverse 17 besteht. Die Traverse 17 ist über die gesamte Höhe der Kranmasten 15, 16 vertikal verschiebbar, wobei in Fig. 4 die unterste Position gezeigt ist. In dieser Position kann die Maschinengondel 10 von der Traverse 17 aufgenommen werden, wobei sich der Rotor 11 mit den Rotorblättern 12, 13 vor dem Portalkran 14 befindet.

Zur Verbindung der Maschinengondel 10 mit der Traverse 17 können verschiedene Befestigungs- oder Spannmittel vorgesehen sein, insbesondere auch Schraubverbindungen, hydraulische oder mechanische Spannmittel. An der Unterseite der Traverse 17 befindet sich eine Arbeitsbühne 18, die aus zwei Bühnenelementen 18' besteht, die beim Zuführen der Maschinengondel 10 und Befestigen dieser an der Traverse 17 noch zur Seite geklappt sind und somit eine "Außereinsatzstellung" einnehmen.

In Fig. 5 ist eine Draufsicht auf den Portalkran 14 mit zugeführter Maschinengondel 10 einschließlich Rotor 11 und Rotorblättern 12, 13 gezeigt. Die Maschinengondel 10 wird in Richtung der Pfeile 19 unter die Traverse 17 geschoben, bis die in Fig. 5 gezeigte Position erreicht ist. Dabei ist ein ausreichender Abstand der Rotorblätter 12, 13 zu den Kranmasten 15, 16 gegeben.

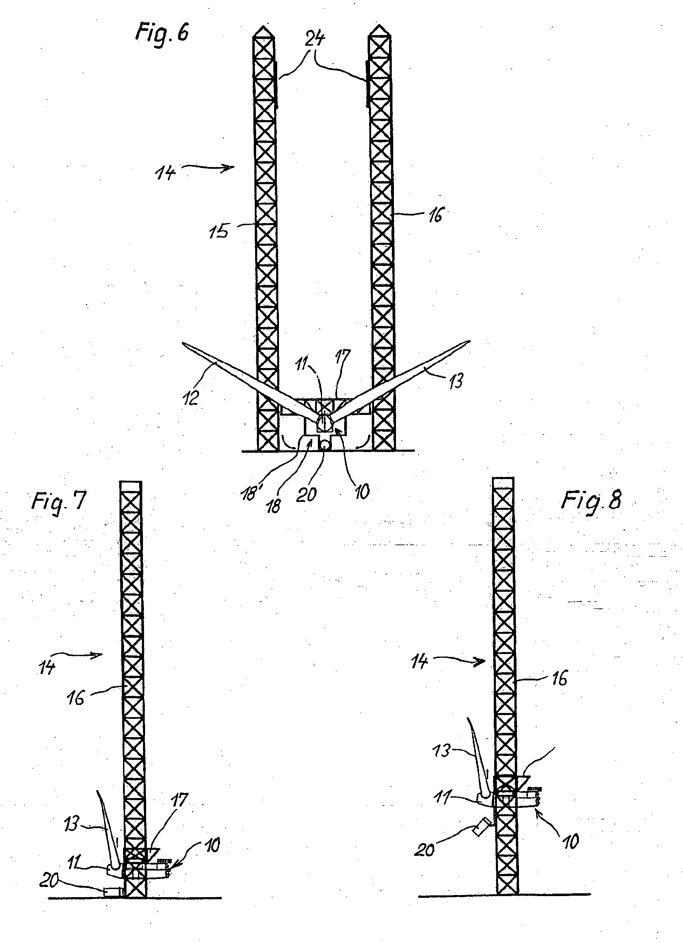

Die Fig. 6 zeigt den Portalkran 14 mit an den Kranmasten 15, 16 ein Stück weit nach oben gefahrener Traverse 17, so dass die Maschinengondel 10 mit Rotor 11 vom Boden abgehoben sind und die Bühnenelemente 18' der Arbeitsbühne 18 in eine "Einsatzstellung" ausgeklappt werden, wobei unten an der Arbeitsbühne eine Aufnahmevorrichtung für ein Rotorblatt 20 zum Transport dieses dritten Rotorblatts 20 vorgesehen werden kann. Im oberen Bereich der Kranmasten 15, 16 sind jeweils Bühnenteile einer Montagebühne 24 vorgesehen, die in Fig. 6 eingeklappt dargestellt sind und deren Funktion später beschrieben wird.

In Fig. 7 ist eine Seitenansicht des Portalkranes 14 mit der Position der Traverse 17 und Maschinengondel 10 gezeigt, die diese in Fig. 6 einnehmen. Für gleiche Bauteile stimmen die Bezugszeichen mit denjenigen der Fig. 4 bis 6 überein. Vom dritten Rotorblatt 20 ist lediglich der an der Arbeitsbühne 18 aufgenommene Abschnitt gezeigt.

Die Fig. 8 zeigt eine Darstellung gemäß Fig. 7 mit weiter angehobener Traverse 17 und Maschinengondel 10 mit Rotor 11. Durch das Anheben des Endes des Rotorblattes 20 mit dem Hochfahren der Traverse 17 wird die in Fig. 8 gezeigte schräge Stellung des Rotorblattes 20 erreicht. Im Übrigen sind auch hier für gleiche Bauteile die Bezugszeichen der Fig. 4 bis 7 eingesetzt.

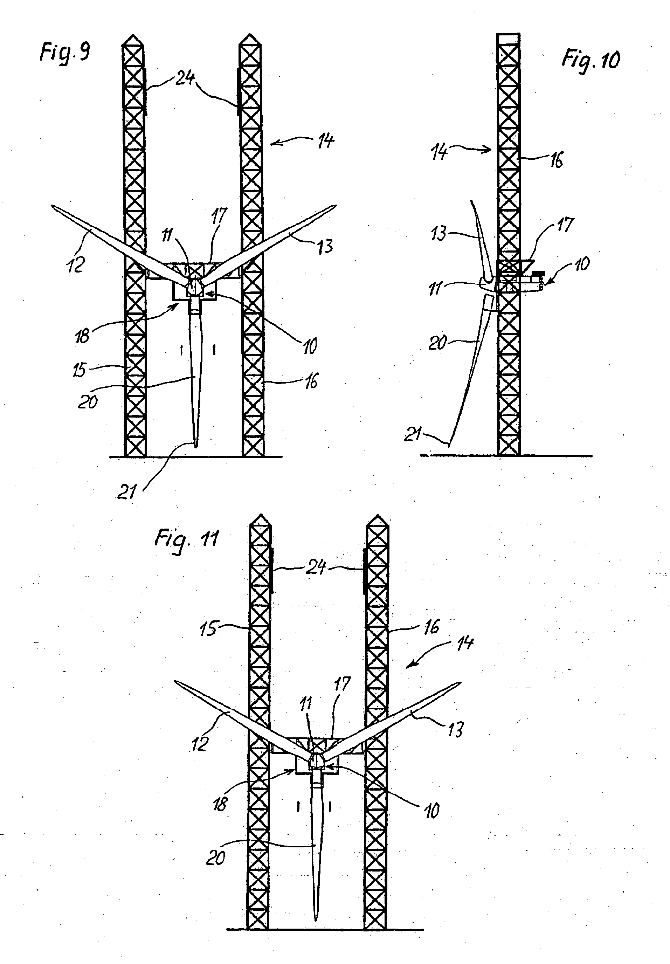

In Fig. 9 ist die Traverse 17 an den Kranmasten 15, 16 des Portalkrans 14 so weit hochgefahren, dass das dritte Rotorblatt 20 eine Lage einnimmt, in der eine Montage am Rotor 11 erfolgen kann. Ein vorderer Teil 21 des Rotorblattes 20 wird dabei mittels einer Vorrichtung geführt, bis das Rotorblatt 20 am Rotor 11 montiert ist. Eine Seitenansicht der Anordnung gemäß Fig. 9 ist in Fig. 10 dargestellt, wobei die Bezugszeichen für gleiche Bauteile ebenso mit denjenigen der vorhergehenden Figuren übereinstimmen.

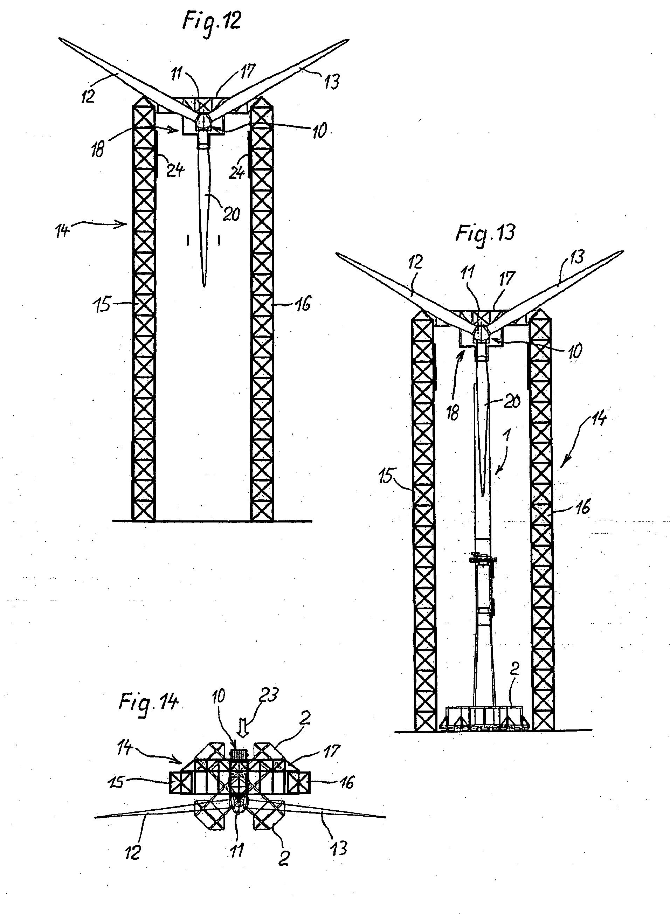

Wie aus Fig. 11 ersichtlich, hängt nach der Montage des Rotorblattes 20 am Rotor 11 das Rotorblatt 20 am Rotor, so dass eine Führung des Rotorblattes nicht mehr notwendig ist und die Vorrichtung entfernt wird. Danach wird, wie Fig. 12 zeigt, die Traverse 17 mit Maschinengondel 10 und komplett bestücktem Rotor 11 bis nahe an das obere Ende der Kranmasten 15, 16 des Portalkrans 14 gefahren, wobei noch ein geringer Restweg für einen eventuellen Ausgleich verbleibt.

Die Fig. 13 zeigt eine Darstellung des Portalkrans 14 wie in Fig. 12, jedoch mit zwischen den Kranmasten 15, 16 positioniertem Mast 1 mit Flachgründung 2. Wegen des nach unten weisenden Rotorblattes 20 wird der Mast 1 mit der Flachgründung von der Rückseite her in die Position zwischen die Kranmasten 15, 16 gebracht, bei der sich die Befestigungsvorrichtung zur Montage der Maschinengondel 10 auf dem Mast 1 vertikal exakt über dem oberen Maststück 9 befindet, jedoch in einem in Fig. 13 gezeigten Abstand.

In Fig. 14 ist die Draufsicht auf die Anordnung gemäß Fig. 13 gezeigt. Mit dem Pfeil 23 ist die Richtung angegeben, in der der Mast 1 und die Flachgründung 2 in den Zwischenraum zwischen den Kranmasten 15, 16 eingebracht wird. Im Übrigen stimmen für gleiche Bauteile die Bezugszeichen der vorhergehenden Figuren überein.

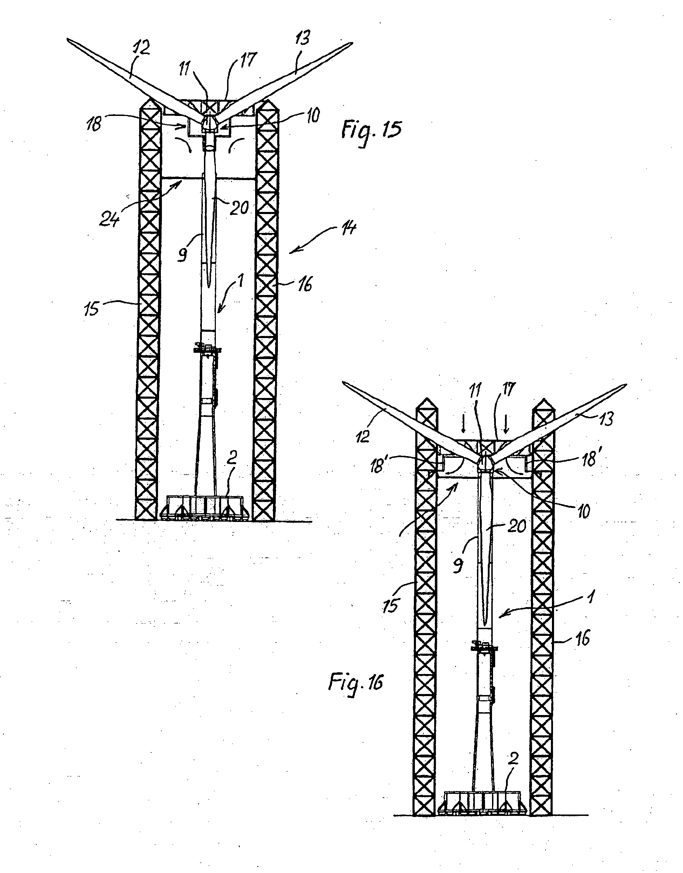

Die Fig. 15 zeigt den Portalkran 14 mit zwischen den Kranmasten 15, 16 positioniertem Mast 1 und Flachgründung 2 für die Offshore-Windenergieanlage. Die beiden Bühnenteile einer im oberen Bereich der Kranmasten 15, 16 befindlichen Montagebühne 24 sind zur Mitte hin ausgeklappt und fixieren dabei das obere Maststück 9, an dem die Montagebühne 24 anliegt. Diese Fixierung dient dazu, dass der Mast 1 während des Aufsetzens der Maschinengondel 10 keine Relativbewegung zum Portalkran 14 ausführt. Nach dem Ausklappen der Montagebühne 24 kann dann die Maschinengondel 10 auf dem oberen Maststück 9 aufgesetzt werden, wozu zunächst die Arbeitsbühne 18 eingeklappt und dann die Traverse 17 mit der Maschinengondel 10 und Rotor 11 abgesenkt wird. Diese Arbeitsschritte sind in Fig. 16 dargestellt, wobei die Bühnenelemente 18' der Arbeitsbühne 18 wieder unter die Traverse 17 geklappt sind und die Maschinengondel 10 auf dem oberen Maststück 9 aufsitzt. Nun können die Montagearbeiten zur Befestigung der Maschinengondel 10 auf dem Maststück 9 durchgeführt werden. Die Bezugszeichen in Fig. 15 und 16 stimmen für gleiche Teile mit denjenigen der zuvor beschriebenen Figuren überein.

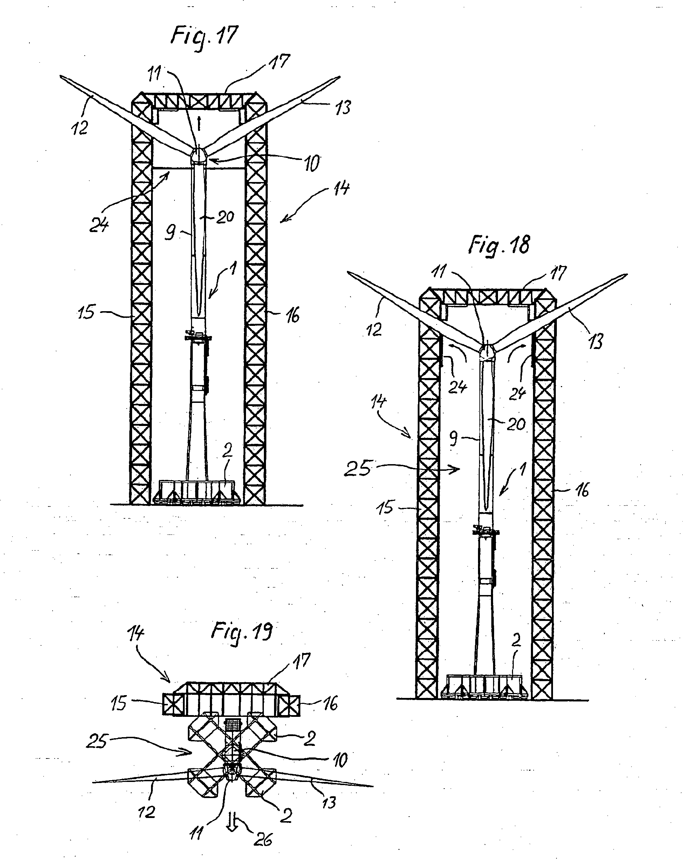

Nachdem die Montage der Maschinengondel 10 auf dem oberen Maststück 9 durchgeführt ist, wird gemäß Fig. 17 die Traverse 17 wieder nach oben in eine angehobene Position gefahren. Danach folgt das Einklappen der beiden Bühnenteile der Montagebühne 24, wie dies in Fig. 18 dargestellt ist. Damit ist eine aus Mast 1, Flachgründung 2, Maschinengondel 10 und Rotor 11 bestehende Windenergieanlage 25 fertig gestellt, die komplett transportiert und in einem Offshore-Gebiet fest installiert wird. Der Transport erfolgt dabei mittels einer schwimmenden Transportvorrichtung, die am Bestimmungsort für die Windenergieanlage 25 absenkbar ist und die Windenergieanlage auf dem Meeresboden absetzt.

Nach der Fertigstellung der Windenergieanlage 25 wird diese gemäß Fig. 19 aus dem Portalkran 14 herausgefahren, und zwar in Richtung des Pfeils 26, wobei dieses auch bevorzugt die Richtung ist, in der sich im Hafenbecken die Transportvorrichtung zur Verbringung der Windenergieanlage 25 an deren Bestimmungsort befindet.

Bei dem vorstehend beschriebenen Beispiel des Portalkrans 14 für die Montage der Windenergieanlage 25 handelt es sich um einen ortsfest auf dem Betriebsgelände installierten Portalkran. Alternativ hierzu liegt es ebenfalls im Rahmen der Erfindung, einen fahrbaren Portalkran vorzusehen.

Wie bereits erwähnt, kann der Mast 1 mittels des Portalkrans 14 aufgebaut werden. Hierzu wird beispielsweise zunächst das obere Maststück 9 von der Traverse 17 aufgenommen und angehoben, bis das Mastelement 6 aufrecht darunter passt. Es erfolgt dann die Verbindung von Mastelement 6 und Maststück 9. Selbstverständlich ist es je nach Konstruktion des Mastes 1 auch möglich, mehrere Mastelemente bzw. Maststücke vorzusehen. Nach dem weiteren Anheben der Traverse 17 mit daran befindlicher Teileinheit des Mastes auf eine Höhe, die eine vertikale Anordnung des Basiselementes 4 darunter ermöglicht, wird das Basiselement 4 zugeführt und auf diesem die Teileinheit aufgesetzt und befestigt, , so dass der Mast 1 komplett ist. Sofern das Basiselement 4 zunächst nicht mit der Flachgründung 2 versehen ist, wird nach weiterem Anheben der Traverse 17 die Flachgründung 2 zwischen die Kranmasten 15, 16 gebracht und der Mast 1 an der Flachgründung 2 befestigt. Neben diesem Beispiel des Verfahrens zur Montage des Mastes 1 sind auch andere Abläufe möglich.

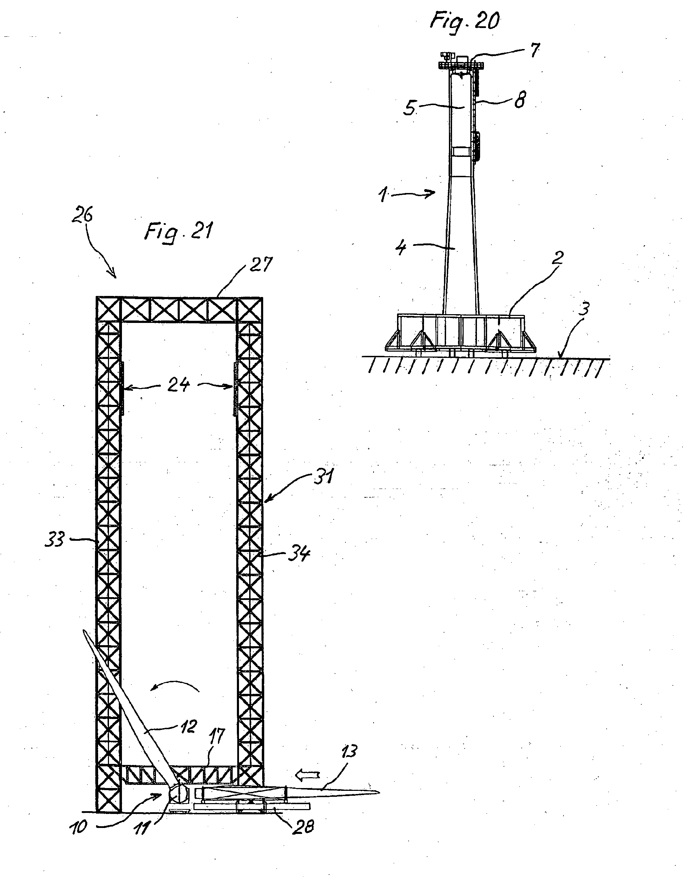

In Fig. 20 ist der Mast 1 mit Flachgründung 2 und Basiselement 4 gezeigt, wie er demjenigen in Fig. 1 bis zur Plattform 7 entspricht, der auf dem Betriebsgelände 3 zur Montage von Windenergieanlagen steht.

Die Fig. 21 zeigt einen vorderen Rahmen 31 eines Portalkrans 26, wobei dieser Rahmen 31 aus zwei Kranmasten 33, 34 und einer ortsfesten Brücke 27 am oberen Ende der Kranmasten 33, 34 besteht. Der Portalkran 26 umfasst - wie später noch näher erläutert wird - insgesamt vier Kranmasten. An dem vorderen Rahmen 31 ist zwischen den Kranmasten 33, 34 die vertikal verschiebbare Traverse 17 angeordnet. In Fig. 21 befindet sich die Traverse 17 in der untersten Position, in der die Aufnahme der Maschinengondel 10 an der Unterseite der Traverse 17 möglich ist. An dem Rotor 11 ist bereits ein Rotorblatt 12 montiert, ein weiteres Rotorblatt 13 liegt auf der Montageplatte 28 zur Befestigung am Rotor 11 bereit. An den Kranmasten 33, 34 ist im oberen Bereich die Montagebühne 24 vorgesehen.

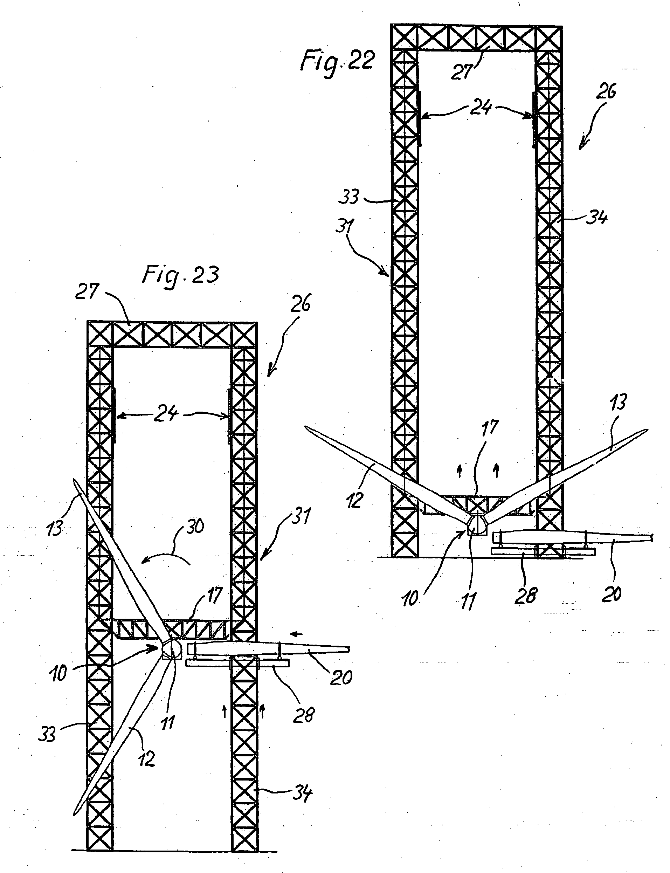

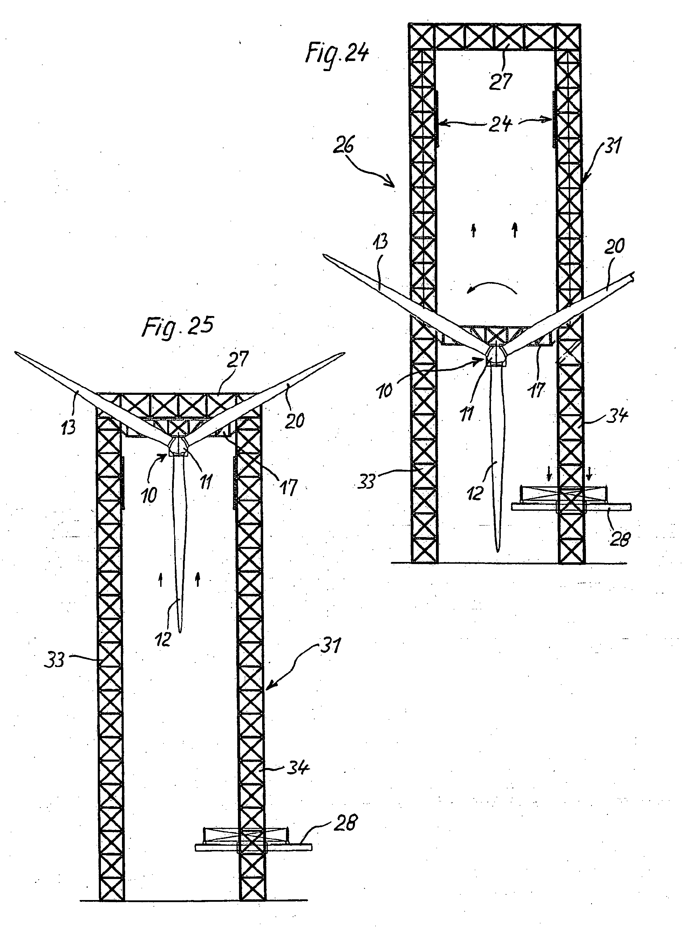

In Fig. 22 ist der vordere Rahmen 31 des Portalkrans 26 dargestellt, wobei am Rotor 11 zusätzlich zum Rotorblatt 12 bereits das Rotorblatt 13 montiert ist und auf der Montageplatte 28 das dritte Rotorblatt 20 bereit liegt. Zur Montage des dritten Rotorblatts 20 wird die Traverse 17 vertikal nach oben in die in Fig. 23 gezeigte Position gefahren und ebenso die Montageplatte 28, so dass der Rotor 11 in Richtung des Pfeils 30 gedreht werden kann, um die Befestigung des Rotorblatts 20 am Rotor 11 zu ermöglichen. Nach erfolgter Montage des dritten Rotorblatts 20 am Rotor 11 kann die Montageplatte 28 wieder abgesenkt werden, wie dies aus Fig. 24 ersichtlich ist. Gemäß Fig. 25 wird die Traverse 17 dann mit der Maschinengondel 10 vertikal nach oben bis an die Brücke 27 angehoben. Alle übrigen Bezugszeichen in Fig. 22 bis 25 stimmen für gleiche Teile mit denjenigen der Fig. 21 überein.

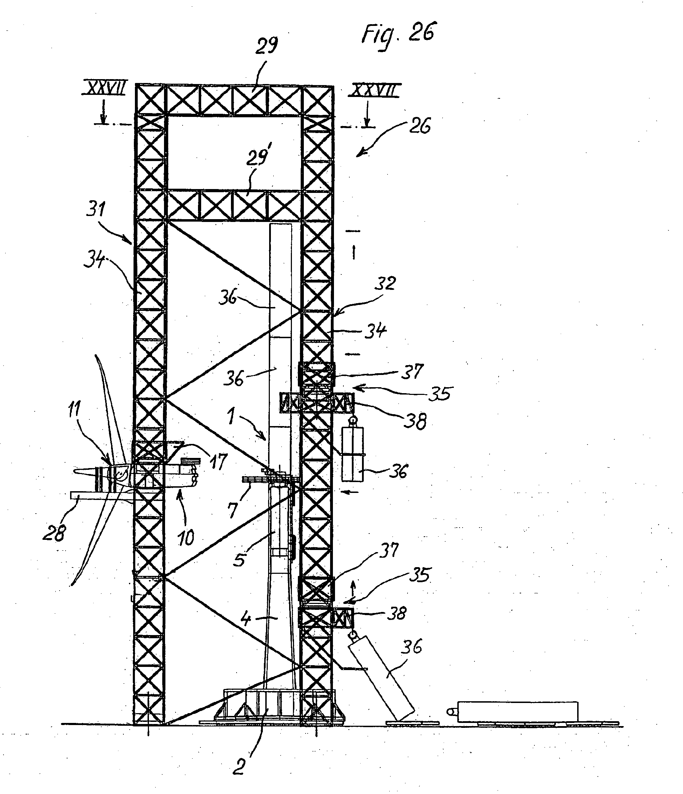

In Fig. 26 ist eine Seitenansicht des Portalkrans 26 gezeigt, allerdings mit Traverse 17 und Maschinengondel 10 am vorderen Rahmen 31 in mittlerer Höhe. An einem hinteren Rahmen 32 ist eine vertikal verschiebbare Vorrichtung 35 angeordnet, die zur Aufnahme und zum Anheben von Mastelementen 36 dient, welche auf den Mast 1 bzw. das auf diesem befindliche Mastelement 5 aufgesetzt werden. Um darzustellen, wie diese Montage der Mastelemente 36 erfolgen kann, ist die Vorrichtung 35 in zwei verschiedenen Höhen am hinteren Rahmen 32 gezeigt. Die Vorrichtung 35 umfasst eine zwischen den Kranmasten des hinteren Rahmens befindliche Hubtraverse 37 und einen unter dieser angeordneten Drehkranarm 38 mit Kranhaken. Wie ersichtlich ist, werden die Mastelemente 36 an dem Kranhaken angehängt, dann durch Hinauffahren der Hubtraverse 37 nach oben befördert und schließlich durch Schwenken des Drehkranarms 38 oder Ausfahren eines Teleskoparms über das vorher montierte Mastelement geschwenkt und auf diesem abgesetzt.

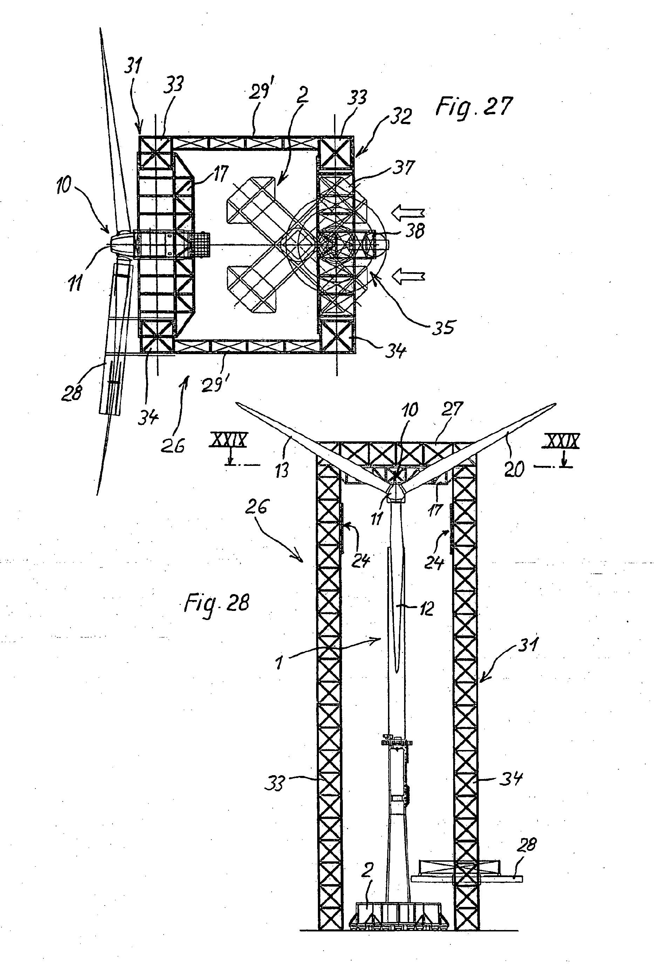

Die Fig. 27 zeigt einen Schnitt durch den Portalkran 26 entlang der Linie XXVII-XXVII mit zugeführter Flachgründung 2 bzw. Mast 1. Der Portalkran 26 besteht aus dem vorderen Rahmen 31 und dem hinteren Rahmen 32, wobei letzterer ebenfalls zwei Kranmasten 33, 34 und eine ortsfeste Brücke 27 umfasst. Damit sind insgesamt 4 Kranmasten 33, 34 vorhanden. Der vordere Rahmen 31 und der hintere Rahmen 32 sind mittels der Stege 29' miteinander verbunden. Am vorderen Rahmen 31 ist die Traverse 17 angeordnet mit der daran befindlichen Maschinengondel 10.

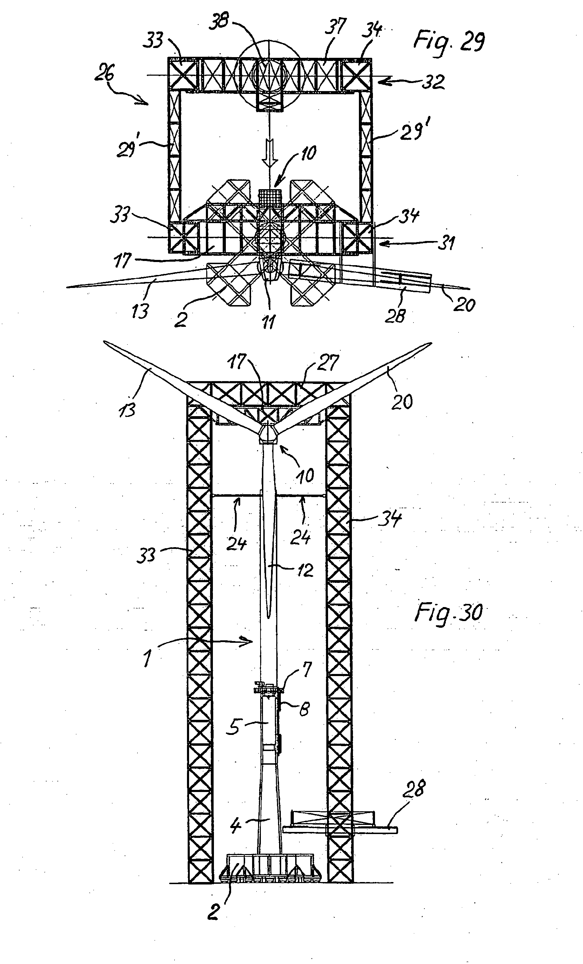

In Fig. 28 ist eine Vorderansicht des Portalkrans 26 gezeigt, wobei sich die Flachgründung 2 mit Mast 1 innerhalb des vorderen Rahmens 31 zwischen dessen Kranmasten 33, 34 befindet. Wie aus Fig. 29 deutlich wird, die eine Ansicht des Schnittes entlang der Line XXIX-XXIX in Fig. 28 zeigt, ist die Position zum Aufsetzen der Maschinengondel 10 auf den auf der Flachgründung 2 befindlichen Mast 1 gegeben, wobei der Mast zu diesem Zweck unter der ortsfesten Brücke 27 des vorderen Rahmens 31 platziert ist. Im Übrigen stimmen die Bezugszeichen in Fig. 28 und 29 für gleiche Teile mit denjenigen der Fig. 20 bis 27 überein.

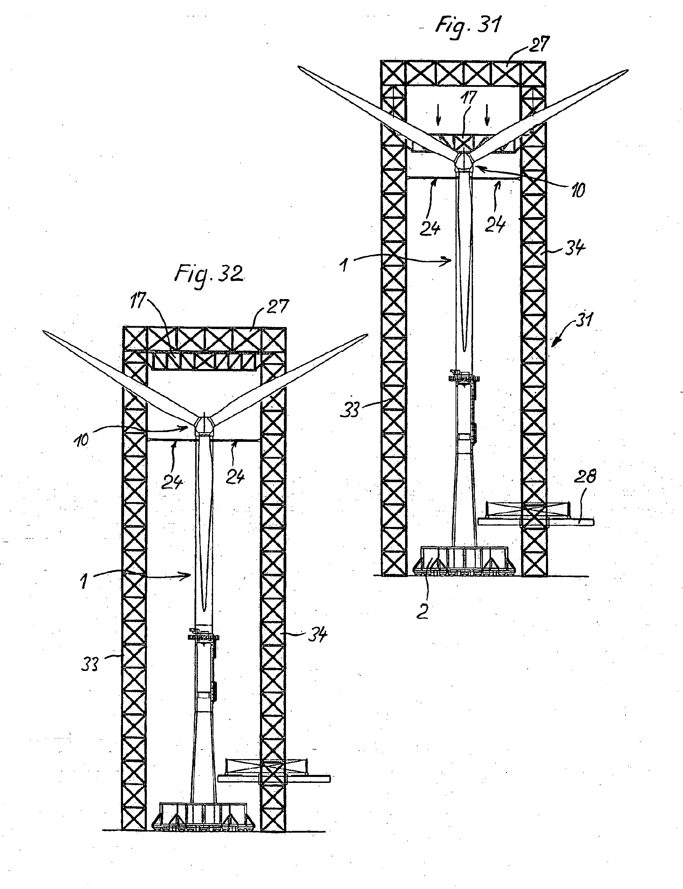

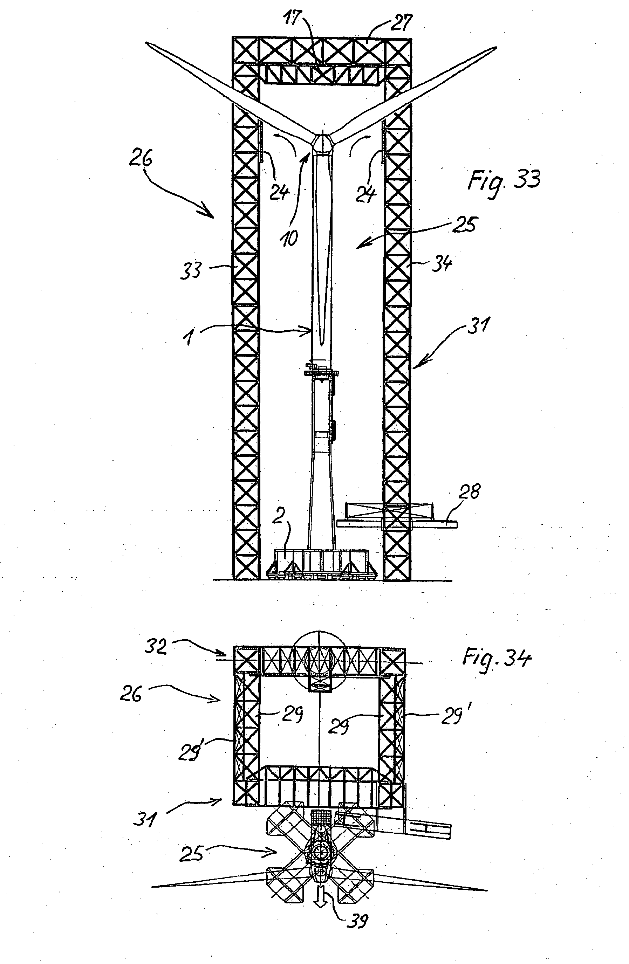

In Fig. 30 ist eine Ansicht auf den Portalkran 26 mit zwischen den Kranmasten 33, 34 des vorderen Rahmens 31 positioniertem Mast 1 und Flachgründung 2 für die Offshore-Windenergieanlage gezeigt. Die beiden Bühnenteile der im oberen Bereich an den Kranmasten 33, 34 befindlichen Montagebühne 24 sind zur Mitte hin ausgeklappt und fixieren dabei das obere Ende des Mastes 1, an dem die Montagebühne 24 anliegt. Damit werden Relativbewegungen des Mastes 1 zum Portalkran 26 während der Montage der Maschinengondel 10 auf dem Mast 1 vermieden. Danach wird - wie Fig. 31 zeigt - die Traverse 17 mit der Maschinengondel 10 abgesenkt und letztere auf dem Mastende aufgesetzt. Nun können die Montagearbeiten zur Befestigung der Maschinengondel 10 auf dem Mast 1 durchgeführt werden. Nach Abschluss dieser Montagearbeiten wird die Maschinengondel 10 von der Traverse 17 gelöst und diese gemäß Fig. 32 nach oben an die Brücke 27 gefahren. Schließlich erfolgt das Einklappen der Bühnenteile der Montagebühne 24 wie in Fig. 33 dargestellt.

Damit ist die aus Mast 1, Flachgründung 2, Maschinengondel 10 und Rotor 11 bestehende Windenergieanlage 25 fertig gestellt, die komplett transportiert und in einem Offshore-Gebiet fest installiert wird. Nach Fertigstellung der Windenergieanlage 25 wird diese gemäß Fig. 34 nach vorne aus dem Portalkran 26 herausgefahren in Richtung des Pfeils 39. Aus dieser Draufsicht ist ersichtlich, dass die Seitentraversen 29 am oberen Ende zwischen dem vorderen Rahmen 31 und dem hinteren Rahmen 32 breiter ausgeführt sind als die darunter befindlichen Seitentraversen 29' (vgl. Fig. 29).

Der in den Fig. 21 bis 36 beschriebene Portalkran 26 bietet nicht nur den Vorteil einer besseren mechanischen Festigkeit und Standsicherheit, sondern ermöglicht auch die gleichzeitige Montage der Rotorblätter 12, 13, 20 am Rotor 11 und das Aufbauen des Mastes durch Montage der Mastelemente 36 auf dem unteren Mastelement 5 auf der Flachgründung 2.

## Patentansprüche

1. Vorrichtung zur Herstellung von Offshore-Windenergieanlagen (25) an Land mit einem Kran zum Anheben und Aufsetzen von Bauteilen, Baugruppen und/oder einer Maschinengondel (10) der Windenergieanlage, wobei der Kran als Portalkran (14,) gestaltet ist, der mindestens zwei Kranmasten (15, 16;) und mindestens eine an den Kranmasten (15, 16;) vertikal verfahrbar gelagerte Traverse (17) umfasst, und an der Traverse (17) eine Vorrichtung zum Aufnehmen der Bauteile, Baugruppen und/oder Maschinengondel (10) vorgesehen ist, wobei an der Unterseite der Traverse (17) eine Arbeitsbühne (18) angeordnet und unten an der Arbeitsbühne (18) eine Aufnahmevorrichtung für ein Rotorblatt (20) vorgesehen ist,
**dadurch gekennzeichnet, dass** die Arbeitsbühne (18) zwei an der Unterseite der Traverse (17) schwenkbar gelagerte Bühnenelemente (18') umfasst, die eine zur Durchführung von Arbeiten vorgesehene Einsatzstellung sowie eine Außereinsatzstellung einnehmen können.

2. Vorrichtung nach Anspruch 1,
**dadurch gekennzeichnet, dass** an mindestens einem der Kranmasten (15, 16; 33, 34) im oberen Bereich eine Montagebühne (24) angeordnet ist, die eine Einsatzstellung und eine Außereinsatzstellung einnehmen kann.

3. Vorrichtung nach Anspruch 2,
**dadurch gekennzeichnet, dass** die Montagebühne (24) zwei schwenkbar gelagerte Bühnenteile umfasst, die an einander zugewandten Seiten der Kranmasten (15, 16; 33, 34) vorgesehen sind, wobei die Bühnenteile an ihren einander zugewandten Seiten so gestaltet sind, dass sie in der Einsatzstellung den Mast (1) bzw. ein Maststück (9) zwischen sich einschließen.

4. Vorrichtung nach einem der Ansprüche 1 bis 3,
**dadurch gekennzeichnet, dass** der Portalkran (26) einen vorderen und einen hinteren Rahmen (31, 34) umfasst, wobei jeder Rahmen (31, 32) aus zwei Kranmasten (33, 34) und einer ortsfesten Brücke (27) besteht, die die oberen Enden der Kranmasten (33, 34) verbindet.

5. Vorrichtung nach Anspruch 4,
**dadurch gekennzeichnet, dass** der vordere Rahmen (31) mit dem hinteren Rahmen (32) mittels oben an den Kranmasten (33, 34) befestigten Seitentraversen (29, 29') verbunden sind.

6. Vorrichtung nach einem der Ansprüche 4 oder 5,
**dadurch gekennzeichnet, dass** an dem hinteren Rahmen (32) eine Vorrichtung (35) zur Aufnahme und zum Anheben von Mastelementen (36) vorgesehen ist, wobei die Vorrichtung (35) eine Hubtraverse (37) und einen Drehkranarm (38) umfasst.

7. Verfahren zur Herstellung einer Offshore-Windenergieanlage (25) an Land, wobei eine Maschinengondel (10) mittels eines Krans angehoben und auf einem Mast (1) der Windenergieanlage (25) montiert wird, wobei zunächst eine an einer vertikal verfahrbaren Traverse (17) eines Portalkrans (14, 26) vorgesehene Aufnahmevorrichtung mit einer Maschinengondel (10) verbunden und dann die Maschinengondel (10) angehoben wird, wobei die Traverse (17) an den Kranmasten (15, 16; 33, 34) vertikal nach unten gefahren und in einer abgesenkten Position die Maschinengondel (10) an der Unterseite der Traverse (17) befestigt wird und später das Anheben der Maschinengondel (10) durch Hochfahren der Traverse (17) erfolgt, **dadurch gekennzeichnet, dass** zwei an der Unterseite der Traverse (17) schwenkbar gelagerte und eine Arbeitsbühne (18) bildende Bühnenelemente (18') in eine Einsatzstellung geschwenkt werden und das Hochfahren der Traverse (17) in mehreren Schritten erfolgt, wobei nach einem ersten Schritt des Anhebens der Arbeitsbühne (18) in eine Einsatzstellung gebracht wird, und nach Erreichen einer vorbestimmten Höhe der Maschinengondel (10) ein Mast (1) der Windenergieanlage (25) zwischen Kranmasten (15, 16; 33, 34) des Portalkrans (14, 26)gebracht und derart unter der Maschinengondel (10) positioniert wird, dass durch Absenken der Maschinengondel (10) diese auf dem oberen Ende des Mastes (1) abgesetzt und mit diesem fest verbunden wird, und dass nach Fertigstellung der Offshore-Windenergieanlage (25) diese aus dem Portalkran (14, 26) herausgefahren wird.

8. Verfahren nach Anspruch 7,
**dadurch gekennzeichnet, dass** nach dem Positionieren des Mastes (1) zwischen den Kranmasten (15, 16; 33, 34) des Portalkrans (14) Bühnenteile einer im oberen Bereich der Kranmasten (15, 16; 33, 34) angeordneten Montagebühne (24) derart zum Mast (1) hin geschwenkt werden, dass die Bühnenteile ein oberes Maststück zwischen sich einschließen und einspannen.

9. Verfahren nach einem der Ansprüche 7 oder 8,
**dadurch gekennzeichnet, dass** der an der Maschinengondel (10) befindliche Rotor (11) vor dem Anheben der Traverse (17) mit zwei Rotorblättern (12, 13) bestückt wird und nach einem Anheben der Traverse (17) auf eine bestimmte Höhe ein drittes Rotorblatt (20) am Rotor (11) montiert wird.

10. Verfahren nach Anspruch 7,
**dadurch gekennzeichnet, dass** der Mast (1) mittels des Portalkrans (26) aufgebaut wird, indem eine Flachgründung (2) mit einem ersten Mastelement (5) im Bereich eines hinteren Rahmens (32) des Portalkrans (26) positioniert wird und mittels einer Vorrichtung (35) mehrere Mastelemente (36) nacheinander angehoben und aufeinander montiert werden.

## Claims

1. Apparatus for producing offshore wind energy plants (25) on land with a crane to lift and place components, structural units and / or a machine basket (10) of the wind energy plant, wherein the crane is designed as a portal crane (14) which comprises at least two crane masts (15, 16) and at least one cross-beam (17) mounted so that it can be moved vertically on the crane masts (15, 16), and a device for accommodating the components, structural units and / or machine baskets (10) is provided on the cross-beam (17), wherein a work platform (18) is arranged on the lower side of the cross-beam (17) and a receiving device for a rotor blade (20) is provided below on the work platform (18),
**characterised in that** the work platform (18) comprises two platform elements (18') mounted so that they can be pivoted on the lower side of the cross-beam (17), which can assume an operational position provided to carry out works and also a non-operational position.

2. Apparatus according to claim 1,
**characterised in that** an assembly platform (24) is arranged on at least one of the crane masts (15, 16; 33, 34) in the upper region, which can assume an operational position and a non-operational position.

3. Apparatus according to claim 2,
**characterised in that** the assembly platform (24) comprises two pivotably mounted platform parts which are provided on sides of the crane masts (15, 16; 33, 34) facing each other, wherein the platform parts are designed on their sides facing each other so that they enclose the mast (1) or mast piece (9) between them in the operational position.

4. Apparatus according to one of claims 1 to 3,
**characterised in that** the portal crane (26) comprises a front and a rear frame (31, 34), wherein each frame (31, 32) consists of two crane masts (33, 34) and a fixed-location bridge (27) which connects the upper ends of the crane masts (33, 34).

5. Apparatus according to claim 4,
**characterised in that** the front frame (31) is connected to the rear frame (32) by means of side cross-beams (29, 29') fixed above to the crane masts (33, 34).

6. Apparatus according to one of claims 4 or 5,
**characterised in that** a device (35) for receiving and lifting mast elements (36) is provided on the rear frame (32), wherein the device (35) comprises a lifting cross-beam (37) and a slewing crane arm (38).

7. Method for producing an offshore wind energy plant (25) on land,
wherein a machine basket (10) is lifted by means of a crane and mounted on a mast (1) of the wind energy plant (25), wherein initially a receiving device provided on a vertically movable cross-beam (17) of a portal crane (14, 26) is connected to a machine basket (10) and the machine basket (10) is then lifted, wherein the cross-beam (17) on the crane masts (15,16; 33, 34) is moved vertically downwards and the machine basket (10) is fixed in a lowered position on the lower side of the cross-beam (17) and later the lifting of the machine basket (10) is realised by moving the cross-beam (17) upwards,
**characterised in that** two platform elements (18') pivotably mounted on the lower side of the cross-beam (17) and forming a work platform (18) are pivoted into an operational position and the moving upwards of the cross-beam (17) is realised in several stages, wherein after a first lifting step the work platform (18) is brought into an operational position, and after reaching a predetermined height of the machine basket (10) a mast (1) of the wind energy plant (25) is brought between crane masts (15, 16; 33, 34) of the portal crane (14, 26) and positioned below the machine basket (10) in such a way that by lowering the machine basket (10) this is placed on the upper end of the mast (1) and fixedly connected thereto, and that after production of the offshore wind energy plant (25) this is moved out of the portal crane (14, 26).

8. Method according to claim 7,
**characterised in that** after positioning the mast (1) between the crane masts (15, 16; 33, 34) of the portal crane (14), platform parts of an assembly platform (24) arranged in the upper region of the crane masts (15, 16; 33, 34) are pivoted towards the mast (1) such that the platform parts enclose between them and clamp an upper mast element.

9. Method according to one of claims 7 or 8,
**characterised in that** the rotor (11) located on the machine basket (10) is equipped with two rotor blades (12, 13) before raising of the cross-beam (17), and after raising of the cross-beam (17) to a certain height a third rotor blade (20) is mounted on the rotor (11).

10. Method according to claim 7,
**characterised in that** the mast (1) is constructed by means of the portal crane (26) by a surface foundation (2) being positioned with a first mast element (5) in the region of a rear frame (32) of the portal crane (26) and a plurality of mast elements (36) being raised one after the other and mounted on each other by means of a device (35).

## Revendications

1. Dispositif pour fabriquer à terre des installations aérogénératrices en mer (25), avec une grue pour soulever et poser des composants, des modules et/ou une nacelle (10) de l'installation aérogénératrice, étant précisé que la grue est conçue comme une grue à portique (14) qui comprend au moins deux poteaux de grue (15, 16) et au moins une traverse (17) montée mobile verticalement sur les poteaux de grue (15, 16), et qu'il est prévu sur la traverse (17) un dispositif pour recevoir les composants, les modules et/ou la nacelle (10), étant précisé que sur le côté inférieur de la traverse (17) est disposée une plate-forme de travail (18) et que sur le dessous de la plate-forme de travail (18) est prévu un dispositif de réception pour une pale de rotor (20), **caractérisé en ce que** la plate-forme de travail (18) comprend deux éléments de plate-forme (18'), montés pivotants sur le côté inférieur de la traverse (17), qui peuvent adopter une position d'utilisation prévue pour l'exécution de travaux, ainsi qu'une position hors utilisation.

2. Dispositif selon la revendication 1,
**caractérisé en ce que** sur l'un au moins des poteaux de grue (15, 16 ; 33, 34) est disposée, dans la zone supérieure, une plate-forme de montage (24) qui peut adopter une position d'utilisation et une position hors utilisation.

3. Dispositif selon la revendication 2,
**caractérisé en ce que** la plate-forme de montage (24) comprend deux éléments de plate-forme montés pivotants qui sont prévus sur les côtés tournés vers l'autre des poteaux de grue (15, 16 ; 33, 34), étant précisé que les éléments de plate-forme sont conçus, sur les côtés tournés l'un vers l'autre, de manière à entourer dans la position d'utilisation le mât (1) ou une pièce de mât (9).

4. Dispositif selon l'une des revendications 1 à 3,
**caractérisé en ce que** la grue à portique (26) comprend un châssis avant et un châssis arrière (31, 34), étant précisé que chaque châssis (31, 32) se compose de deux poteaux de grue (33, 34) et d'un pont fixe (27) qui relie les extrémités supérieures des poteaux de grue (33, 34).

5. Dispositif selon la revendication 4,
**caractérisé en ce que** le châssis avant (31) est relié au châssis arrière (32) à l'aide de traverses latérales (29, 29') fixées, en haut, aux poteaux de grue (33, 34).

6. Dispositif selon l'une des revendications 4 ou 5,
**caractérisé en ce qu'**il est prévu sur le châssis arrière (32) un dispositif (35) pour recevoir et pour soulever des éléments de mât (36), étant précisé que le dispositif (35) comprend une traverse de levage (37) et un bras de grue pivotante (38).

7. Procédé pour fabriquer à terre des installations aérogénératrices en mer (25), étant précisé qu'une nacelle (10) est soulevée à l'aide d'une grue et est montée sur un mât (1) de l'installation aérogénératrice (25), qu'un dispositif de réception prévu sur une traverse (17) mobile verticalement d'un grue à portique (14, 26) est tout d'abord relié à une nacelle (10) et que ladite nacelle (10) est ensuite soulevée, étant précisé que la traverse (17) est déplacée verticalement vers le bas sur les poteaux de grue (15, 16 ; 33, 36) et que dans une position abaissée, la nacelle (10) est fixée au côté inférieur de la traverse (17) et que le soulèvement de la nacelle (10) se fait plus tard grâce au soulèvement de la traverse (17),
**caractérisé en ce que** deux éléments de plate-forme (18') qui sont montés pivotants sur le côté inférieur de la traverse (17) et qui forment une plate-forme de travail (18) pivotent jusqu'à une position d'utilisation et le soulèvement de la traverse (17) se fait en plusieurs étapes, étant précisé qu'après une première étape de soulèvement, la plate-forme (18) est amenée dans une position d'utilisation, et qu'une fois qu'une hauteur prédéfinie de la nacelle (10) est atteinte, un mât (1) de l'installation aérogénératrice (25) est amené entre les poteaux (15, 16 ; 33, 36) de la grue à portique (14, 26) et est positionné sous la nacelle (10) de telle sorte que grâce à l'abaissement de la nacelle (10), celle-ci est déposée sur l'extrémité supérieure du mât (1) et est reliée solidement à celui-ci, et qu'une fois que l'installation aérogénératrice en mer (25) est terminée, elle est sortie de la grue à portique (14, 26).

8. Procédé selon la revendication 7,
**caractérisé en ce qu'**après le positionnement du mât (1) entre les poteaux (15, 16 ; 33, 34) de la grue à portique (14), des éléments d'une plate-forme de montage (24) disposée dans la zone supérieure des poteaux de grue (15, 16 ; 33, 34) pivotent en direction du mât (1) de manière à entourer et à enserrer entre eux une pièce de mât supérieure.

9. Procédé selon l'une des revendications 7 ou 8,
**caractérisé en ce que** le rotor (11) qui se trouve sur la nacelle (10) est équipé, avant le soulèvement de la traverse (17), de deux pales de rotor (12, 13), et après un soulèvement de la traverse (17) jusqu'à une hauteur définie, une troisième pale (20) est montée sur le rotor (11).

10. Procédé selon la revendication 7,
**caractérisé en ce que** le mât (1) est érigé à l'aide de la grue à portique (26) grâce au fait qu'un fondement plat (2) avec un premier élément de mât (5) est positionné dans la zone d'un châssis arrière (32) de la grue à portique (26), et qu'à l'aide d'un dispositif (35) plusieurs éléments de mât (36) sont successivement soulevés et montés les uns sur les autres.
